# EUROPÄISCHE PATENTANMELDUNG

(11) **EP 3 418 830 A1**
(43) Veröffentlichungstag der Anmeldung: **26.12.2018**
(21) Anmeldenummer: 17177290.8
(22) Anmeldetag: 22.06.2017
(51) Int. Cl.: G05B 19/4099, B33Y 80/00, B22F 3/12

(54) **VERFAHREN ZUM VORBEREITEN DER HERSTELLUNG EINES ZAHNRADARTIGEN WERKZEUGS UND 3D-MATRIZEN, DIE NACH DEM VERFAHREN HERGESTELLT WURDEN**

(71) Anmelder: Klingelnberg AG, 8050 Zürich (CH)
(72) Erfinder: Müller, Hartmuth, 42857 Remscheid (DE)
(74) Vertreter: Heusch, Christian

(57) **Zusammenfassung**

Verfahren zum Vorbereiten der Herstellung eines zahnradähnlichen Werkzeugs mit den folgenden Schritten
- Bereitstellen von eines ersten Datensatzes (D1), der das herzustellende Werkzeug charakterisiert,
- Ermitteln eines zweiten Datensatzes (D2), der eine 3D-Matritze charakterisiert, die eine Kavität für das metallurgische Herstellen des Werkzeugs umfasst, deren Form ein Negativ des Werkzeugs darstellt,
- Herstellen der 3D-Matritze mittels eines 3D-Druckverfahrens (3D), wobei der zweite Datensatz (D2) zum direkten oder indirekten Steuern des 3D-Druckverfahrens (3D) eingesetzt wird.

## Beschreibung

Die vorliegende Erfindung betrifft Verfahren zum Vorbereiten der Herstellung eines zahnradartigen-Werkzeugs und 3D-Matrizen, die nach diesem Verfahren hergestellt wurden.

### Stand der Technik

Es gibt eine Reihe von computer-gesteuerten Verfahren, die unter dem Oberbegriff des Rapid-Prototyping zusammengefasst werden. Eine Untergruppe des Rapid-Prototyping befasst sich mit generierenden Verfahren zum Herstellen 3-dimensionaler Strukturen. Ein klassisches Beispiel ist das 3D-Drucken, das nicht nur im industriellen sondern auch im Privatbereich Einzug gehalten hat.

Auch bei der Herstellung von Zahnrädern gibt es Ansätze diese mittels eines generierenden Verfahrens herzustellen, wobei solche Verfahren bisher typischerweise zur Herstellung klein-moduliger Kunststoff-Zahnräder angewendet werden.

Weiterhin ist bekannt, dass Zahnräder nicht nur durch materialabtragende Verfahren, wie z.B. Fräsen, sondern auch durch Schmiedeverfahren hergestellt werden können. Auch sind mittlerweile Ansätze bekannt, um Zahnräder durch Sintern herzustellen, wobei deren Einsatz auf Gebiet mit geringeren Festigkeitsanforderungen beschränkt ist.

Im Zusammenhang mit der Herstellung oder Bearbeitung von Zahnrädern, kommen teilweise zahnradartige Werkzeuge zum Einsatz, die eine spezielle Formgebung aufweisen. Als Beispiel sind hier Schälräder genannt, die zur Wälzschälbearbeitung von Zahnrad-Werkstücken eingesetzt werden. Der Einsatz solcher Schälräder hat sich in der Zahnradproduktion bewährt. Es ist jedoch ein Nachteil, dass meist für jeden Typ von Zahnrad-Werkstück ein genau passendes Schälrad vorhanden sein muss.

Um solche Schälräder standfest und robust zu machen, werden sie beispielweise aus pulvermetallurgischem Hartmetall oder pulvermetallurgischem (Hochleistungs-) Schnellschnittstahl (HSS) gefertigt. Aus den Vorgaben, dass pro Typ von Zahnrad-Werkstück ein genau passendes Schälrad vorhanden sein muss und dass die Schälräder aus Hartmetall oder pulvermetallurgischem HSS gefertigt sein sollten, ergeben sich relativ hohe Werkzeugkosten.

Es stellt sich die Aufgabe einen technischen Ansatz bereit zu stellen, der sich zur schnellen und hochgenauen Fertigung von zahnradähnlichen Werkzeugen eignet.

Dieser Ansatz soll reproduzierbar sein und robuste, für den Dauereinsatz geeignete zahnradähnliche Werkzeuge liefern.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche.

Das Verfahren der Erfindung ist speziell auf das Vorbereiten der Herstellung eines zahnradähnlichen Werkzeugs, wie zum Beispiel eines Schälrades, ausgelegt. Es umfasst vorzugsweise bei allen Ausführungsformen die folgenden Schritte:
- Bereitstellen von eines ersten Datensatzes, der das herzustellende Werkzeug charakterisiert,
- Ermitteln eines zweiten Datensatzes, der eine 3D-Matritze charakterisiert, die eine Kavität für das metallurgische Herstellen des Werkzeugs umfasst, deren Form ein Negativ des Werkzeugs darstellt,
- Herstellen der 3D-Matritze mittels eines 3D-Fertigungsprozesses (z.B. eines 3D-Druckverfahrens), wobei der zweite Datensatz zum direkten oder indirekten Steuern des 3D-Druckverfahrens eingesetzt wird.

Bei einem Teil der Ausführungsformen wird der erste Datensatz in einem vorbereitenden Schritt durch Laden eines Datenfiles bereitgestellt wird.

Bei einem Teil der Ausführungsformen wird der erste Datensatz bereitgestellt, indem in einem vorbereitenden Schritt das Werkzeug anhand von Vorgaben ausgelegt und dann der erste Datensatz ermittelt wird.

Bei einem Teil der Ausführungsformen wird in einem vorbereitenden Schritt ein Profil der Schneiden des Werkzeugs definiert, um aus dieser Definition der Schneiden des Werkzeugs den ersten Datensatz zu berechnen.

Vorzugsweise handelt es sich bei allen Ausführungsformen bei dem Werkzeug um ein Schälrad zur Verzahnungsbearbeitung oder um ein schälradartiges Werkzeug zur Verzahnungsbearbeitung.

Vorzugsweise handelt es sich bei allen Ausführungsformen bei dem Werkzeug um ein Schälrad zur Verzahnungsbearbeitung oder um ein schälradartiges Werkzeug zur Verzahnungsbearbeitung, das im Bereich einer Stirnseite oder am Umfang Schneiden aufweist, wobei
- in einem ersten vorbereitenden Schritt ein Profil der Schneiden definiert wird, um
- in einem zweiten vorbereitenden Schritt aus dieser Definition der Schneiden des Werkzeugs eine 3-dimensionale Form des Werkzeugs (10) zu berechnen, die als erster Datensatz gespeichert wird.

Bei einem Teil der Ausführungsformen wird beim Ermitteln des ersten Datensatzes und/oder des zweiten Datensatzes eine 3-dimensionale Grundform des Werkzeugs in zwei oder drei Raumrichtungen so vergrößert, dass eine 3-dimensionale Definition des Werkzeugs entsteht, die gegenüber der 3-dimensionalen Grundform ein Aufmaß umfasst, das eine Schrumpfung bei einer anschließenden metallurgischen Herstellung des Werkzeugs und/oder einen Schleifabtrag bei einem abschließenden Schleifen des metallurgisch hergestellten Werkzeugs berücksichtigt.

Bei einem Teil der Ausführungsformen wird/werden beim Ermitteln des zweiten Datensatzes eine oder mehrere der folgenden Randbedingungen oder Rahmenbedingungen berücksichtigt:
- die 3D-Matritze umfasst vorzugsweise bei allen Ausführungsformen mindesten eine Kavität, die mit einer exakt vorherbestimmten Menge eines Füllstoffs befüllbar sein muss;
- es wird darauf geachtet, dass in dem fertigen Werkzeug eine möglichst homogen Dichteverteilung resultiert;
- es wird darauf geachtet, dass die Verdichtung des Füllstoffs in allen Bereichen der Kavität zeitgleich erfolgen kann, um eine ausreichend gute Bindung zwischen diesen einzelnen Bereichen zu erzielen;
- es wird darauf geachtet, dass die 3D-Matritze keine Hinterschneidungen umfasst, um ein Entnehmen des fertigen Werkzeugs aus der 3D-Matritze zu ermöglichen;
- das Zustellen/Bewegen von Stempel muss durch den Einsatz der Achsen der Presse oder Maschine möglich sein;
- es sollte eine Presse oder Maschine mit möglichst wenigen Stempeln zum Einsatz kommen, um eine hohe Reproduzierbarkeit und Genauigkeit gewähren zu können;
- die Stempel der Presse oder Maschine dürfen beim Bewegen weder mit der 3D-Matritze noch miteinander kollidieren oder sich behindern;
- alle Komponenten der Presse oder Maschine, inklusive der 3D-Matritze, sollen in der Lage sein den Druck aufzunehmen, der erforderlich ist, um das Werkzeug zu sintern;
- die Herstellkosten der 3D-Matritze und/oder des Stempels sollten in einem wirtschaftlich vertretbaren Rahmen liegen, damit die Herstellung des Werkzeugs wirtschaftlich sinnvoll ist;

Vorzugsweise kommt bei der eigentlichen Herstellung des Werkzeugs - die nach den vorbereitenden Schritten erfolgt - ein pulverförmiger Füllstoff zum Einsatz. Der uniaxiale Druck, dem der pulverförmige Füllstoff beim Sintern ausgesetzt wird, leitet nur einen kleinen Anteil dieses Drucks in die laterale Richtung ab. Dadurch ist es möglich eine 3D-Matrize, die mit einem 3D-Fertigungsprozess hergestellt wurde, zum Hochdruck-Sintern von Zahnrad-Werkstücken zu verwenden.

Vorzugsweise kommt bei der eigentlichen Herstellung des Werkzeugs - die nach den vorbereitenden Schritten erfolgt - ein Hartmetall-Füllstoff zum Einsatz.

Die Erfindung nutzt die Erkenntnis, dass 3D-Matritzen, die mit einem der genannten 3D-Druckverfahren hergestellt wurden, durchaus in der Lage sind die auftretenden hohen Drücke aufzunehmen.

Erfindung bietet unter anderem den Vorteil, dass zahnradartige Werkzeuge, wie z.B. Schälräder, mit einer 3D-gedruckten Matrize und unter Einsatz eines pulvermetallurgischen Pressverfahrens mit ausreichend hoher Genauigkeit und der erforderlichen Robustheit des Werkzeugs hergestellt werden kann. Außerdem ist dieser Ansatz günstiger, was es möglich macht für jeden Typ von Zahnrad das entsprechende Werkzeug vorzuhalten oder bei Bedarf herzustellen.

Es ist ein Vorteil der Erfindung, dass sie ein endkontur-nahes Pressen des zu sinternden Werkzeugs ermöglicht. Unter Umständen ist lediglich eine geringe Schleifbearbeitung der zahnartigen Strukturen und/oder der Schneiden des Werkzeugs nach dem Sintern erforderlich. Dieser Aspekt ist vor allem dann von Bedeutung, wenn es sich um ein Hartmetall-Werkzeug handelt, da das Schleifen von Hartmetall zeit- und kostenaufwendig ist.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.
- **FIG. 1A-1F**: zeigt stark schematisierte Abbildungen der Verfahrensschritte einer beispielhaften Ausführungsform der Erfindung;
- **FIG. 2**: zeigt ein schematisiertes Flussdiagramm der Verfahrensschritte einer beispielhaften Ausführungsform der Erfindung;
- **FIG. 3**: zeigt ein schematisiertes Flussdiagramm der Verfahrensschritte eines 3D-Fertigungsprozesses, der Teil einer beispielhaften Ausführungsform sei kann;
- **FIG. 4**: zeigt ein schematisiertes Flussdiagramm der Verfahrensschritte eines metallurgischen Herstellungsverfahrens, das Teil einer beispielhaften Ausführungsform sei kann;
- **FIG. 5**: zeigt eine beispielhafte Vorrichtung, die im Rahmen eines 3D-Fertigungsprozesses eingesetzt werden kann;
- **FIG. 6**: zeigt eine stark schematisierte Ansicht eines beispielhaften Schälrades, das mit dem Verfahren der Erfindung herstellbar ist, wobei dieses Schälrad eine zylindrische Außenkontur aufweist;
- **FIG. 7A**: zeigt eine stark schematisierte Ansicht eines weiteren beispielhaften Wälzschälrades, das mit dem Verfahren der Erfindung herstellbar ist, wobei dieses Schälrad eine zylindrische oder leicht konische Außenkontur aufweist;
- **FIG. 7B**: zeigt einen Polygonzug, der die Schneiden des Wälzschälrades der Fig. 7A definiert.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um primär um das Vorbereiten der Herstellung eines zahnradartigen Werkzeugs 10. Das Verfahren der Erfindung eignet sich vor allem für die Herstellung von Schälrädern und schälradartigen Werkzeugen.

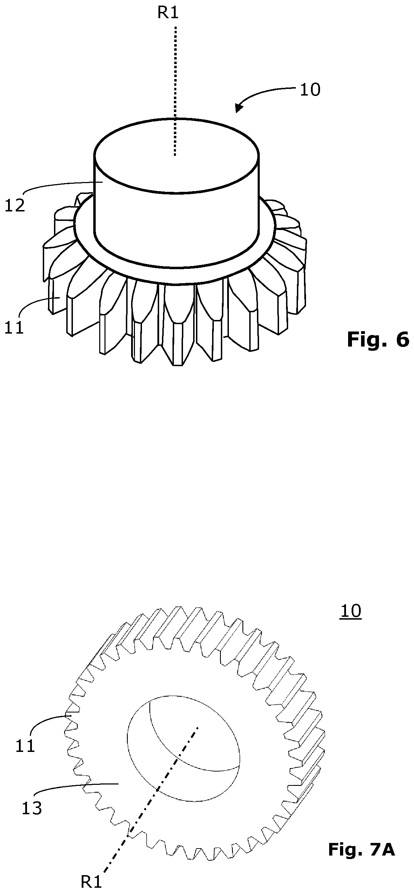

Zahnradartige Werkzeuge 10 sind im Sinne der Erfindung Werkzeuge, die mehrere geometrisch bestimmte Schneiden umfassen. Ein Wälzschälwerkzeug weist daher z.B. einen schälradartigen Werkzeugbereich auf, der Schneiden hat, die in Form von Schneidzähnen 11 ausgeprägt sind, die schräg nach außen ragen (siehe z.B. Figuren 6 und 7A). Wälzschälwerkzeuge 10, die mit dem Verfahren der Erfindung hergestellt oder bearbeitet werden können, werden hier auch als Schälräder bezeichnet.

Der Fokus liegt auf der Herstellung eines Werkzeugs 10 oder einer kleinen Anzahl von baugleichen Werkzeugen 10. Die hier beschriebenen Lösungen lassen sich aber auch bei der Herstellung einer größeren Anzahl von Werkzeugen 10 anwenden.

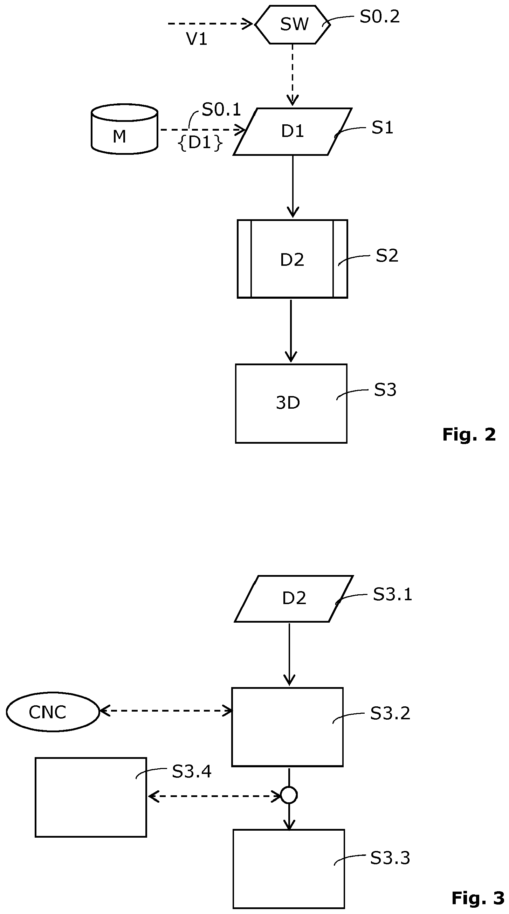

Um die Herstellung eines Werkzeugs 10 vorzubereiten, wird gemäß einer ersten Ausführungsform ein erster Datensatz D1 bereitgestellt, der das herzustellende Werkzeug 10 charakterisiert bzw. definiert. Dieser Schritt ist in Fig. 2 als Schritt S1 bezeichnet. Es ist nicht relevant, wie dieser Datensatz D1 bereitgestellt wird. Er kann z.B., wie in Fig. 2 gezeigt, aus einem Speicher M als Datenfile {D1} geladen werden. Es ist aber auch denkbar den ersten Datensatz D1 im Rahmen einer Werkzeug-Auslegung zu definieren. Ein entsprechender optionaler Schritt ist in Fig. 2 als Schritt S0.2 gezeigt. Um ein Werkzeug auslegen zu können, kann bei allen Ausführungsformen z.B. eine entsprechende Design-oder Auslegungssoftware SW zum Einsatz kommen, die mit Vorgaben V1 gespeist wird.

Es gibt zahlreiche Möglichkeiten für einen Fachmann, um den ersten Datensatz D1 zu erstellen oder zu erhalten.

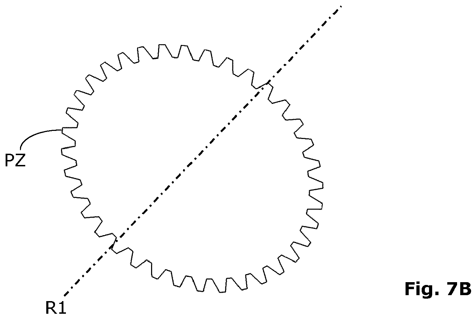

Da die Schneiden der Schälräder 10 von zentraler Bedeutung sind, beginnt die Auslegung eines solchen Werkzeugs 10 vorzugsweise stets mit einer Definition der Schneiden. In Fig. 7B sind die Schneiden des Werkzeugs 10 der Fig. 7A durch einen Polygonzug dargestellt, wobei der Polygonzug PZ im gezeigten Beispiel eine 2-dimensionale oder eine 3-dimensionale Form im Raum haben kann.

Sobald die Lage und Form der Schneiden definiert ist, wie z.B. in Fig. 7B gezeigt, kann in einem nachfolgenden Schritt die 3-dimensionale Grundform des Werkzeugs 10 definiert werden. Diese 3-dimensionale Grundform kann bei allen Ausführungsformen z.B. mittels eines virtuellen Extrusionsverfahrens berechnet werden. Dabei wird der Polygonzug PZ, der die Schneiden definiert, koaxial zur Rotationsachse R1 im Raum verschoben. Falls das Werkzeug 10 eine konische Grundform bekommen soll, so wird gleichzeitig wird der Polygonzug PZ skaliert (vergrößert oder verkleinert). Bei einer zylindrischen Grundform ist keine Skalierung erforderlich.

In einem ersten vorbereitenden Schritt (z.B. im S0.1) kann also das Profil der Schneiden definiert werden, um dann in einem zweiten vorbereitenden Schritt aus dieser Definition der Schneiden des Werkzeugs 10 eine 3-dimensionale Form des Werkzeugs 10 zu berechnen. Diese 3-dimensionale Form kann dann als erster Datensatz D1 gespeichert werden.

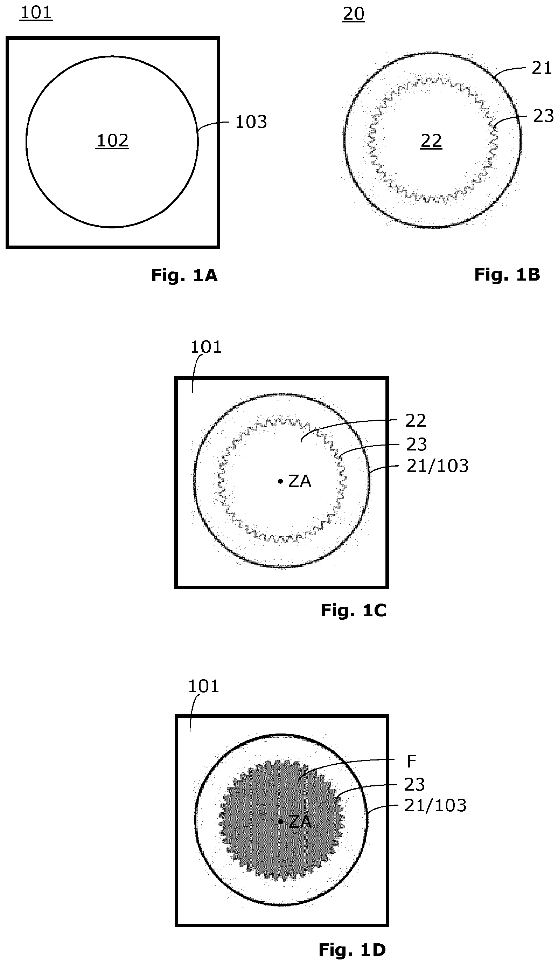

Gemäß einer Ausführungsform der Erfindung wird nun ein zweiter Datensatz D2 ermittelt, der eine 3D-Matritze 20 charakterisiert. Dieser Schritt wird auch als Schritt S2 bezeichnet. Eine solche 3D-Matritze 20 umfasst mindestens eine Kavität 22 für das metallurgische Herstellen des Werkzeugs 10. In Fig. 1B ist ein Stirnschnitt durch eine zylinderförmige 3D-Matritze 20 gezeigt. Die Kavität 22 bildet eine 3-dimensionale Negativform des Zahnrad-Werkstücks 10. D.h. bei einem Zahnrad-Werkstück 10, das eine Außenverzahnung aufweisen soll, hat die Kavität 22 eine entsprechende Innenverzahnung, wie man in Fig. 1B erkennen kann.

Bei allen Ausführungsformen der Erfindung kann das Ermitteln des zweiten Datensatzes D2 z.B. durch das Umrechnen der Positivform des Zahnrad-Werkstücks 10 in die Negativform der Kavität 22 erfolgen. Z.B. kann zu diesem Zweck die einhüllende Außenfläche des Zahnrad-Werkstücks 10 umgerechnet werden in die Innenfläche 23, welche die Kavität 22 umgibt. Dort wo das Zahnrad-Werkstück 10 einen Zahn hat, hat die Kavität 22 eine Zahnlücke und umgekehrt. Dieses Umrechnen der Positivform des Zahnrad-Werkstücks 10 in die Negativform der Kavität 22 kann z.B. durch eine Matrixtransformation erfolgen.

Vorzugsweise kommen bei allen Ausführungsformen der Erfindung beim Ermitteln des zweiten Datensatzes D2 zusätzliche Schritte zum Einsatz, um die 3D-Matritze 20 so durch den Datensatz D2 zu definieren, dass eine Reihe von Randbedingungen Beachtung finden. Diese Randbedingungen (mit RB1, RB2 usw. bezeichnet) werden später genauer anhand von Beispielen definiert.

Gemäß einer Ausführungsform der Erfindung folgt dann das eigentliche Herstellen der 3D-Matritze 20 mittels eines generierenden 3D-Verfahrens. Die geeigneten generierenden 3D-Verfahren werden hier der Einfachheit halber als 3D-Druckverfahren bezeichnet und es wird das Bezugszeichen 3D verwendet. Es ist zu beachten, dass nicht jedes generierende 3D-Verfahren wirklich im eigentlichen Wortsinne ein Druckverfahren ist. Die Verwendung des Begriffs "Druckverfahren" soll jedoch nicht einschränkend verstanden werden.

Als 3D-Druckverfahren wird im Sinne der Erfindung ein Verfahren bezeichnet, bei dem in exakt kontrollierter Art und Weise Schritt-für-Schritt die 3D-Matritze 20 aus einem druck- oder aufbaufähigen Material dM aufbaut wird.

Der zweite Datensatz D2 wird zum Steuern des 3D-Druckverfahrens 3D eingesetzt. Dieser Schritt wird auch als Schritt S3 bezeichnet.

Es kann sich bei dem 3D-Druckverfahren bei allen Ausführungsformen z.B. um ein Flüssigkeits-basiertes, Pulver-basiertes oder Metall-basiertes Druckverfahren handeln. Derartige Verfahren und die entsprechenden Gerätschaften sind kommerziell verfügbar.

Vorzugsweise kommt bei allen Ausführungsformen ein 3D-Druckverfahren zum Einsatz, das geeignet ist hochfeste, hochgenaue und in sich starre 3D-Matritzen 20 zu liefern.

Besonders geeignet ist das selektive Laser-Sinter-Verfahren, das auf Entwicklungen von C.R. Deckard et al. zurückgeht. Details sind z.B. dem US-Patent 5,155,324 zu entnehmen. Bei diesem Verfahren kommt ein Pulver als druckfähiges Medium dM zum Einsatz, das bei Hitze schmilzt. So kann Schicht-für-Schicht jeweils eine Lage oder Schicht dieses Pulvers aufgetragen und dann mit einem Laserstrahl punktuell oder bereichsweise geschmolzen werden. Dadurch werden quasi einzelne Punkte oder Bereiche dieser Schicht lokal gesintert. Dann wird eine weitere Lage oder Schicht dieses Pulvers aufgetragen und erneut wird das Pulver punktuell oder bereichsweise mit dem Laserstrahl geschmolzen.

Ähnliche Ansätze sind unter dem Begriff des selektiven Laserschmelzens (SLS) bekannt und eignen sich ebenso zur Anwendung im Zusammenhang mit der Herstellung von 3-dimensionalen Matrizen 20.

Ähnliche Ansätze verwenden einen Elektronenstrahl statt eines Lasers, wobei auch der Elektronenstrahl für ein lokal genau kontrolliertes Schmelzen z.B. eines Metallpulvers sorgt. Die Auflösung ist bei der Verwendung eines Elektronenstrahls höher als bei der Verwendung eines Laserstrahls.

Andere Ansätze verwenden eine lichtgesteuerte elektrophoretische Abscheidung (EDP genannt), um 3-dimensionale Strukturen im additiven oder generativen Verfahren aufzubauen. Auch diese Ansätze sind hier geeignet.

Mit den genannten Mitteln bzw. Ansätzen, die als Beispiele zu verstehen sind, können 3-dimensionale Matrizen 20 gefertigt werden, die sehr präzise und zugleich stabil sind. Auf diesem Wege sind beliebige 3-dimensionale Formen möglich, egal wie komplex diese sind.

Vorzugsweise hat ein 3D-Drucker, damit er im Zusammenhang mit der Erfindung eingesetzt werden kann, mehrere nummerisch gesteuerte Achsen. Ideal sind Vorrichtungen zu 3D-Drucken, die mindestens 4 nummerisch gesteuerte Achsen umfassen.

Wie bereits erwähnt, ist der Begriff des 3D-Druckers im vorliegenden Zusammenhang breit zu verstehen. Es handelt sich im Sinne der Erfindung bei jeder Vorrichtung um einen 3D-Drucker, wenn diese in der Lage ist aus einem flüssigen und/oder rieselfähigen (z.B. Pulver) und/oder festen druck-oder aufbaufähigen Medium dM 3-dimensionale Strukturen im additiven oder generativen Verfahren aufzubauen.

Besonders geeignet sind 3D-Drucker, die eine Schichtdicke der einzeln zu bearbeitenden Schichten haben, die im Bereich zwischen 50 und 300 Mikrometern liegen.

Es ist auch ein Vorteil des Einsatzes eines 3D-Druckers, dass man mehrere Strukturen gleichzeitig herstellen kann. So kann man z.B. die Matrize 20 gleichzeitig mit dem Stempel 104 oder dem Stempelkopf eines Stempels 104 drucken.

Als druck- oder aufbaufähiges Medium dM im Sinne der Erfindung sind besonders geeignet:
- Metallpulver (z.B. Stahl, Aluminium, Bronze, Titan) oder Metall in anderer, rieselfähiger Form (wie z.B. kleine Metallkugeln), und/oder
- Karbide (z.B. Siliziumcarbid) und/oder Oxide (z.B. Metalloxide oder Nichtoxidkeramiken) und/oder Nitride (z.B. Siliziumnitrid) , und/oder
- Kunststoff (z.B. Acryl), und/oder
- Verbundwerkstoffe.

D.h. die Matrize 20 umfasst im fertigen Zustand eines der genannten druck- oder aufbaufähigen Medien dM oder ein Material, das sich aus dem druck- oder aufbaufähigen Medium dM ergibt (z.B. durch Schmelzen, Fusion oder Reaktion).

Um 3D-Matritzen 20 herstellen zu können, die für eine nachgelagerte metallurgische Herstellung des Werkzeugs 10 geeignet sind, müssen jedoch eine Reihe von Aspekten beachten werden, die hier als Randbedingungen/Rahmenbedingungen (abgekürzt RB) bezeichnet werden. Im Folgenden sind die wesentlichen Aspekte, ohne Anspruch auf Vollständigkeit, aufgeführt. Die Reihenfolge hat nichts mit der Bedeutung der Aspekte zu tun.
RB1: Die 3D-Matritze 20 umfasst vorzugsweise bei allen Ausführungsformen mindesten eine Kavität 22, die mit einer exakt vorherbestimmten Menge eines Füllstoffs F befüllbar sein muss.
RB2: Da die Herstellung des Werkzeugs 10 auf einem genau kontrollierten Verdichten des Füllstoffs F in der Kavität 22 mit einem oder mehreren Stempeln beruht, muss darauf geachtet werden, dass die Dichteverteilung in dem fertigen Werkzeug 10 möglichst homogen ist.
RB3: Da die Kavität 22 bei Werkzeugen10 verschiedene Bereiche umfasst (z.B. die einzelnen Zähne 11), sollte darauf geachtet werden, dass die Verdichtung des Füllstoffs F in all diesen Bereichen zeitgleich erfolgt, um eine ausreichend gute Bindung zwischen diesen einzelnen Bereichen zu erzielen.
RB4: Das Werkzeug10 muss nach dem Pressen auf der Presse oder Maschine 100, respektive aus der 3D-Matritze 20 entnommen werden können. Hinterschneidungen sind daher im Prinzip nicht möglich, wenn nicht besondere Maßnahmen getroffen werden.
RB5: Die Bewegung(en) der Stempel 104 muss durch den Einsatz der Achsen der Presse oder Maschine 100 möglich sein (umso mehr Achsen die Presse oder Maschine 100 hat, umso mehr Freiheitsgrade ergeben sich beim Pressvorgang).
RB6: Die Presse oder Maschine 100 sollte mit möglichst wenigen Stempeln 104 auskommen, um eine hohe Reproduzierbarkeit und Genauigkeit gewähren zu können.
RB7: Die Stempel 104 der Presse oder Maschine 100 dürfen beim Bewegen weder mit der 3D-Matritze 20 noch miteinander kollidieren oder sich behindern.
RB8: Alle Komponenten der Presse oder Maschine 100, inklusive der 3D-Matritze 20, müssen in der Lage sein den Druck aufzunehmen, der erforderlich ist. Auf den Füllstoff F können im Inneren der 3D-Matritze 20 Drücke einwirken, die einige hundert Pa bis zu einigen Gigapascal (GPa) betragen.

Im Zusammenhang mit der Randbedingung RB8 ist zu beachten, dass ein pulverförmiger Füllstoff F, der einem uniaxialen Druck (z.B. parallel zur Zentralachse ZA in Fig. 1D) ausgesetzt wird, nur einen kleinen Anteil dieses Drucks in die laterale Richtung abgibt. D.h. bedeutet für die Praxis, dass die einzelnen Pulverpartikel nur einen geringen Druck in radialer Richtung auf die Innenfläche 23 der 3D-Matritze 20 abgeben.

Es hat sich gezeigt, dass aufgrund dieser Tatsache 3D-Matritzen 20, die mit einem der genannten 3D-Druckverfahren hergestellt wurden, durchaus in der Lage sind die auftretenden Drücke aufzunehmen.

Vor allem kann eine 3D-Matritze 20 bei allen Ausführungsformen eine zylinderförmige Außenfläche 21 aufweisen (siehe z.B. Fig. 1B), die exakt in eine zylinderförmige Aufnahmeöffnung 102 einen starren Aufnahmekörpers 101 eingesetzt werden kann. In Fig. 1A ist ein beispielhafter Aufnahmekörper 101 gezeigt, der eine zylinderförmige Aufnahmeöffnung 102 umfasst. Diese Aufnahmeöffnung 102 ist von einer Wandung 103 begrenzt.

In Fig. 1C ist der Zustand gezeigt, nachdem die 3D-Matritze 20 der Fig. 1B in die zylinderförmige Aufnahmeöffnung 102 des Aufnahmekörpers 101 der Fig. 1A eingesetzt wurde. Die zylinderförmige Außenfläche 21 liegt exakt an der Wandung 103 an. Damit werden Druckkräfte radial nach außen geleitet.
RB9: Weiterhin sollten die Herstellkosten der 3D-Matritze 20 und/oder des Stempels in einem wirtschaftlich vertretbaren Rahmen liegen, damit die Herstellung des/der Werkzeugs/e 10 wirtschaftlich sinnvoll ist.
RB10: Bei der Definition der 3-dimensionalen Form der 3D-Matritze 20, respektive des Werkzeugs 10 sollte bei allen Ausführungsformen ein Aufmaß berücksichtig werden können. Dieses Aufmaß ist erforderlich, um prozessbedingten Schrumpfungen beim Sintern und/oder einem anschließenden Schleifen des Werkzeugs 10 Rechnung zu tragen. Daher kann z.B. beim Ermitteln des ersten Datensatzes D1 und/oder des zweiten Datensatzes D2 eine 3-dimensionale Grundform des Werkzeugs 10 in zwei oder drei Raumrichtungen so vergrößert werden, dass eine 3-dimensionale Definition des Werkzeugs 10 entsteht, die gegenüber der 3-dimensionalen Grundform ein Aufmaß umfasst, das eine Schrumpfung bei einer anschließenden metallurgischen Herstellung des Werkzeugs 10 und/oder einen Schleifabtrag bei einem abschließenden Schleifen des metallurgisch hergestellten Werkzeugs 10 berücksichtigt.

Als metallurgischer Füllstoff F im Sinne der Erfindung sind die im Folgenden genannten Stoffe besonders geeignet, wobei die typische Auswahl an verfügbaren Stoffen deutlich eingeschränkt ist, da das Werkzeug 10 standfest sein soll:
- elektrolytische Metalle, und/oder
- Hartmetalle, und/oder
- Werkzeugstahl-Mischungen oder -Legierungen, und/oder
- Metallcarbid (z.B. Titankarbid), und/oder
- Keramik, vor allen Silikat-, Oxid- und Nichtoxid-Keramik, (jeweils z.B. mit Metalladditiv(en) in Form von Metallkügelchen).

Besonders für die Herstellung von Schälrädern 10 oder schälradartigen Werkzeugen 10 geeignet sind Hartmetallpulver und pulvermetallurgische HSS-Materialien, da das fertige Werkzeug 10 so eine sehr dauerhafte und robuste Struktur erhält.

Es sollte auch darauf geachtet werden, dass der Füllstoff F eine ausreichende Rieselfähigkeit aufweist, da nur so alle Bereiche der Kavität 22 der 3D-Matritze 20 gleichmäßig befüllt werden können. Die Rieselfähigkeit hat mit der Partikelform und -größe zu tun.

Als Partikel werden hier Pulver, Granulate, Pellets, Tabletten oder anderes gekörntes Material bezeichnet.

Die Partikel können bei allen Ausführungsformen in einem Wachs (z.B. Paraffin) oder Öl enthalten sein, wobei hier auf die Gießfähigkeit statt auf die Rieselfähigkeit zu achten ist.

Die Partikel haben vorzugsweise bei allen Ausführungsformen eine mittlere Korngröße bzw. Partikelgröße, die kleiner ist als 0,5mm.

Besonders geeignet sind die folgenden Metalle: Fe (Eisen), FeO, SiO₂, Cu (Kupfer), Zn, Zn-Stearate, Ni (Nickel), Mn (Mangan), MnS, Ti (Titan) und Hartmetall-Verbundwerkstoffe oder Hartmetallsorten, die eines oder mehrere der folgenden Bestandteile (z.B. als Legierungselemente) umfasst: Wolfram, Titan, Niob, Vanadium, Kobalt, Nickel.

Dem metallurgischen Füllstoff F kann bei allen Ausführungsformen ein (Re-)Agens beigemengt sein. Als Beispiel ist ein Schmiermittel genannt (wie z.B. Wachs oder Öl). Auch verwendet werden kann ein Grafit oder eine Keramik, um weitere Beispiele zu nennen.

Ein Teil der Figuren 1A bis 1F wurde bereits beschrieben. Im Folgenden wird anhand dieser Figuren kurz ein beispielhaftes Verfahren zu Herstellung eines Werkzeugs 10 erläutert.

Fig. 1A zeigt einen beispielhaften Aufnahmekörper 101, der starr sein muss, um sämtliche Kräfte aufzunehmen, die in einer Presse oder Maschine 100 auftreten. Der Aufnahmekörper 101 hat hier einen quadratischen Querschnitt und weist konzentrisch zu einer Zentralachse ZA einen zylindrische Aufnahmeöffnung 102 auf.

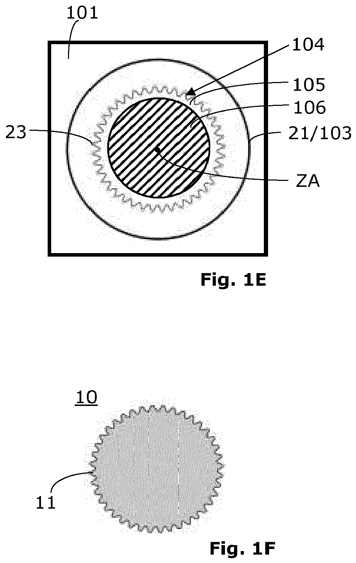

Die zylindrische Aufnahmeöffnung 102 kann bei allen Ausführungsformen z.B. als Sackloch ausgeführt sein, das nur von oben her zugänglich ist. In einem solchen Fall umfasst die Presse oder Maschine 100 lediglich einen Stempel 104, der von oben kommend parallel zur Zentralachse ZA zugestellt wird. In Fig. 1E ist ein Schnitt durch einen beispielhaften Stempel 104 gezeigt.

Fig. 1B zeigt eine Stirnansicht einer beispielhaften 3D-Matrize 20, die mittels eines 3D-Druckverfahrens hergestellt wurde. Die 3D-Matrize 20 hat hier eine Kavität 20 mit der Negativform eines zu fertigenden Werkzeugs 10. Die Stirnansicht eines Werkzeugs 10, das mit einer solchen 3D-Matrize 20 gefertigt wurde, ist in Fig. 1F gezeigt.

Fig. 1C zeigt die 3D-Matrize 20 in der zylindrischen Aufnahmeöffnung 102. Falls das zu fertigende Werkzeug 10 eine konische Form hat, so hat auch die 3D-Matrize 20 einen 3-dimensional konische Verlauf
In den Figuren 1B und 1C ist eine 3D-Matrize 20 für ein Werkzeug 10 mit zylindrischer Form gezeigt.

Fig. 1D zeigt die Situation nach dem Befüllen der Kavität 22 der 3D-Matrize 20 mit einem Füllstoff F.

Fig. 1E zeigt die Abbildung der Fig. 1D, wobei ein erster Stempel 104 oberhalb der 3D-Matrize 20 gezeigt ist. Bei dieser Ausführungsform hat der Stempel 104 einen Stempelkopf 105, der eine Außenverzahnung aufweist. Der Stempelkopf 105 sitzt am unteren Ende eines zylindrischen Stempelschafts 106, der in Fig. 1E geschnitten dargestellt ist. Um die Innenfläche 23 der 3D-Matrize 20 in Fig. 1E überhaupt zeigen zu können, wurde der Außendurchmesser der Außenverzahnung des Stempelkopfs 105 etwas kleiner gezeichnet. In der Praxis ist der Außendurchmesser der Außenverzahnung des Stempelkopfs 105 nahezu identisch mit dem Innendurchmesser der Innenverzahnung der 3D-Matrize 20. Das Spiel zwischen den beiden Durchmessern beträgt nur wenige Mikrometer.

Nach der in Fig. 1E gezeigten Situation wird der Stempel 104 mit einem großen, uniaxial wirkendem Druck in Richtung der 3D-Matrize 20 zugestellt, um den Füllstoff F in der Kavität 20 einem homogenen und sehr hohen Druck auszusetzen. Zusätzlich kann bei allen Ausführungsformen eine hohe Temperatur vorgegeben werden, um das Sintern zu verbessern.

Nach dem Sintern wird der Stempel 104 parallel zur Zentralachse ZA zurückgezogen und das nahezu fertige Werkzeug 10 wird entnommen. Fig. 1F zeigt ein beispielhaftes Werkzeug 10 in einer Stirnansicht. Die Zähne sind mit dem Bezugszeichen 11 versehen.

Fig. 3 zeigt Details einer Ausführungsform eines 3D-Druckverfahrens S3 der Erfindung. Das Verfahren umfasst bei dieser die Ausführungsform folgenden Schritte:
- Laden oder Bereitstellen S3.1 des zweiten Datensatzes D2 in eine 3D-Druckvorrichtung 200,
- Durchführen eines 3D-Fertigungsprozesses S3.2 (auch 3D-Druckverfahren genannt) in der 3D-Druckvorrichtung 200, wobei der 3D-Fertigungsprozeß S3.2 durch den zweiten Datensatz D2 beeinflusst wird, um in einem generierenden Verfahren die 3D-Matritze 20 Schritt-für-Schritt aus einem druck- oder aufbaufähigen Material dM aufzubauen,
- Ausgeben/Entnehmen S3.3 der 3D-Matritze 20 aus der 3D-Druckvorrichtung 200.

Optional kann bei allen Ausführungsformen nach dem Ausgeben/Entnehmen (Schritt S3.3) der 3D-Matritze 20 oder vor dem Ausgeben/Entnehmen (Schritt S3.3) der 3D-Matritze 20 ein Schritt S3.4 zum (Aus- oder Durch-)Härten der 3D-Matritze 20 durchgeführt werden. In Fig. 3 ist dieser optionale Schritt S3.4 als nebengeordneter Schritt gezeigt.

Optional kann der 3D-Fertigungsprozess S3.2 bei allen Ausführungsformen nummerisch gesteuert werden, wie in Fig. 3 durch das Symbol CNC angedeutet, das links neben dem Schritt S3.2 gezeigt ist.

Die verschiedenen Ausführungsformen der Erfindung betreffen primär das Vorbereiten der Herstellung mindestens eines Werkzeugs 10, wobei das Vorbereiten die Herstellung einer 3D-Matrize 20 umfasst.

Die verschiedenen Ausführungsformen der Erfindung können aber auch die Herstellung mindestens eines Werkzeugs10 umfassen.

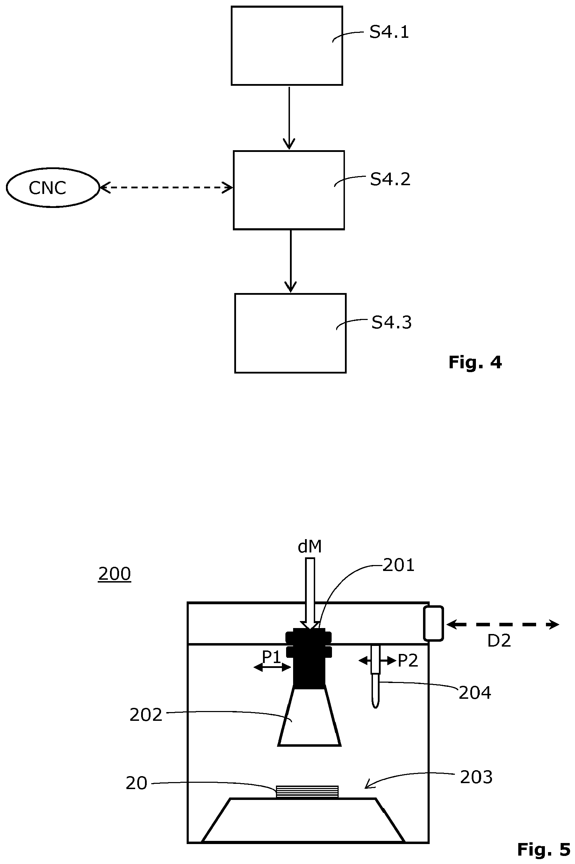

Fig. 4 zeigt Details einer Ausführungsform eines Sinterverfahrens der Erfindung. Das Verfahren umfasst bei dieser Ausführungsform die folgenden Schritte:
- in einem Schritt S4.1, der der Herstellung der 3D-Matrize 20 nachgelagert ist, wird zum Zwecke der metallurgischen Herstellung des Werkzeugs 10 die Kavität 22 mit einem metallurgischen Füllstoff F befüllt (siehe auch Fig. 1D)
- in einem Schritt S4.2 wird dann der Füllstoff F in der Kavität 22 komprimiert (z.B. durch das uniaxiale Zustellen eines Stempels 104).

Anschließend wird in einem weiteren Schritt S4.3 das Werkzeug10 beschädigungsfrei aus der Kavität 22 entnommen.

Es gibt im Stand der Technik verschiedenste Ansätze, die sich auf Lösungen mit nur einem Stempel (z.B. dem Stempel 104) und auf Lösungen mit mehr als nur einem Stempel beziehen. So können z.B. ein erster Stempel 104, der von oben her zugestellt wird, und ein zweiter Stempel, der von unten her zugestellt wird, verwendet werden. Im letzteren Fall ist die Matrize 20 beidseitig offen.

In Fig. 5 ist beispielhaft und in stark schematisierter Form eine 3D-Druckvorrichtung 200 gezeigt. Die Druckvorrichtung 200 umfasst einen Bereich 203, in dem die zu fertigende Matrize 20 und/oder ein Stempel 104 Schritt-für-Schritt aufgebaut wird. Weiterhin ist ein Verteilkopf (Dispenser) 201 vorgesehen, der mit dem druck- oder aufbaufähigen Material dM beschickt wird und dieses durch eine Düse 202 Lage-für-Lage oder Schicht-für-Schicht im Bereich 203 aufträgt. Der Doppelpfeil P1 deutet an, dass der Verteilkopf (Dispenser) 201 hin-und her bewegt werden kann. Zusätzlich kann der Verteilkopf (Dispenser) 201 eine Hubbewegung ausführen, um Schritt-für-Schritt den Abstand gegenüber dem Bereich 203 zu vergrößern. Die Druckvorrichtung 200 umfasst weiterhin z.B. einen Laser 204. Der Doppelpfeil P2 deutet an, dass der Laser 204 hin- und her bewegt werden kann. Zusätzlich kann der Laser 204 eine Hubbewegung ausführen, um jeweils genau auf den zu erhitzenden Punkt zu fokussieren. Durch einen strichlierten Doppelpfeil, der mit D2 beschriftet ist, wird angedeutet, dass der 3D-Druckvorgang durch den zweiten Datensatz D2 gesteuert wird.

Vorzugsweise wird bei allen Ausführungsformen nicht nur die 3D-Matrize 20, sondern auch der Stempel 104 mittels eines 3D-Druckverfahrens 3D hergestellt. In diesem Fall wird ein dritter Datensatz D3 aus dem ersten Datensatz D1 und/oder dem zweiten Datensatz D2 ermittelt und zum direkten oder indirekten Steuern des 3D-Druckverfahrens 3D eingesetzt.

Der zweite Datensatz D2 wird zum direkten oder indirekten Steuern des 3D-Druckvorgang eingesetzt. Unter direktem Steuern versteht man im vorliegenden Zusammenhang einen Vorgang, bei dem der zweite Datensatz D2 unmittelbar in Bewegungen und/oder Aktionen der Druckvorrichtung 200 umgesetzt wird. Unter indirektem Steuern versteht man im vorliegenden Zusammenhang einen Vorgang, bei dem der zweite Datensatz D2 z.B. in eine Art Treibersprache oder Maschinensprache umgewandelt wird, die die Druckvorrichtung 200 zu verstehen in der Lage ist.

In Fig. 5 ist im Bereich 203 eine 3D-Matrize 20 gezeigt, die aus mehreren Schichten aufgebaut ist.

Fig. 6 zeigt ein erstes beispielhaftes Schälwerkzeug 10, das mit dem Verfahren der Erfindung hergestellt werden kann. Das Schälwerkzeug 10 der Fig. 6 hat im Prinzip die Form eines geradverzahnten Stirnrades, wobei die Zähne dieses Stirnrades die Schneidzähne 11 darstellen. Die Spanflächen befinden sich an der Stirnseite, die in Fig. 6 nach unten weist. Die Rotationsachse des Werkzeugs 10 ist mit R1 bezeichnet. Das Werkzeug 10 der Fig. 6 hat einen zylindrischen Schaft 12, der jedoch optional ist.

Fig. 7A zeigt ein weiteres beispielhaftes Schälwerkzeug 10, das mit dem Verfahren der Erfindung hergestellt werden kann. Das Wälzschälwerkzeug 10 hat die Form eines geradverzahnten Stirnrades, wobei die Zähne dieses Stirnrades die Schneidzähne 11 darstellen. Die Spanflächen befinden sich an der Stirnseite 13, die in Fig. 7A sichtbar ist. Das Werkzeug 10 der Fig. 7A hat eine zylindrische oder leicht konische Form. Das Werkzeug 10 der Fig. 7A hat eine zentrale Bohrung 14, die jedoch optional ist.

Da es bei der vorliegenden Erfindung um Werkzeuge 10 und nicht um Zahnräder geht, ist die Ausgestaltung im Bereich der Zahnfüße von untergeordneter Bedeutung. Der aktive Bereich der Schneiden liegt jeweils im oberen Abschnitt der Schneidzähne 11.

**Bezugszeichenliste**

| | |
|---|---|
| zahnradartiges Werkzeug | 10 |
| Schneidzähne | 11 |
| Schaft | 12 |
| Stirnseite | 13 |
| Bohrung | 14 |
| | |
| 3D-Matritze | 20 |
| Außenfläche | 21 |
| Kavität | 22 |
| Innenfläche | 23 |
| | |
| Presse/Maschine | 100 |
| Aufnahmekörper | 101 |
| Aufnahmeöffnung | 102 |
| Wandung der Aufnahmeöffnung | 103 |
| erster Stempel | 104 |
| Stempelkopf | 105 |
| Stempelschaft | 106 |
| | |
| 3D-Druckvorrichtung | 200 |
| Verteilkopf (Dispenser) | 201 |
| Düse | 202 |
| Bereich | 203 |
| Laser | 204 |
| | |
| nummerisch kontrollierte Steuerung | CNC |
| 3D-Druckverfahren | 3D |
| Datensatz | D1, D2, D3 |
| Datenfile | {D1} |
| druckfähiges oder aufbaufähiges Material | dM |
| Füllstoff | F |
| Speicher(-medium) | M |
| Doppelpfeile | P1, P2 |
| Polygonzug | PZ |
| Rotationsachse des Werkzeugs | R1 |
| Randbedingungen/Rahmenbedingungen | RB1, RB2, ... |
| Schritte | S0.1, S0.2, S1, S2, S3, S3.1, S3.2, ... |
| Software | SW |
| Vorgaben | V1 |
| Zentralachse | ZA |

## Patentansprüche

1. Verfahren zum Vorbereiten der Herstellung eines zahnradartigen Werkzeugs (10) mit den folgenden Schritten
- Bereitstellen eines ersten Datensatzes (D1), der das herzustellende Werkzeug (10) charakterisiert,
- Ermitteln eines zweiten Datensatzes (D2), der eine 3D-Matritze (20) charakterisiert, die eine Kavität (22) für das metallurgische Herstellen des Werkzeugs (10) umfasst, deren Form ein Negativ des Werkzeugs (10) darstellt,
- Herstellen der 3D-Matritze (20) mittels eines 3D-Druckverfahrens (3D), wobei der zweite Datensatz (D2) zum direkten oder indirekten Steuern des 3D-Druckverfahrens (3D) eingesetzt wird.

2. Verfahren nach Anspruch 1, **dadurch gekennzeichnet,**
- **dass** der erste Datensatz (D1) in einem vorbereitenden Schritt (S0.1) durch Laden eines Datenfiles ({D1}) bereitgestellt wird, oder
- **dass** der erste Datensatz (D1) bereit gestellt, indem in einem vorbereitenden Schritt (S0.2) das Werkzeug (10) anhand von Vorgaben (V1) ausgelegt und dann der erste Datensatz (D1) ermittelt wird,
- **dass** in einem vorbereitenden Schritt (S0.1) ein Profil der Schneiden des Werkzeugs (10) definiert wird, um aus dieser Definition der Schneiden des Werkzeugs (10) den ersten Datensatz (D1) zu berechnen.

3. Verfahren nach Anspruch 1 oder 2, **dadurch gekennzeichnet, dass** es sich bei dem Werkzeug (10) um ein Schälrad oder ein schälradartiges Werkzeug zur Verzahnungsbearbeitung handelt.

4. Verfahren nach Anspruch 1, **dadurch gekennzeichnet, dass** es sich bei dem Werkzeug (10) um ein Schälrad oder ein schälradartiges Werkzeug zur Verzahnungsbearbeitung handelt, das im Bereich einer Stirnseite oder am Umfang Schneiden aufweist, wobei
- in einem ersten vorbereitenden Schritt (S0.1) ein Profil der Schneiden definiert wird, um
- in einem zweiten vorbereitenden Schritt aus dieser Definition der Schneiden des Werkzeugs (10) eine 3-dimensionale Form des Werkzeugs (10) zu berechnen, die als erster Datensatz (D1) gespeichert wird.

5. Verfahren nach Anspruch 1, 2, 3 oder 4, **dadurch gekennzeichnet, dass** in einem ersten nachgelagerten Schritt (S4.1) zum Zwecke der metallurgischen Herstellung des Werkzeugs (10) die Kavität (22) mit einem metallurgischen Füllstoff (F) befüllt und in einem zweiten nachfolgenden Schritt (S4.2) komprimiert wird.

6. Verfahren nach Anspruch 5, **dadurch gekennzeichnet, dass** beim Ermitteln des zweiten Datensatzes (D2) die Form der Kavität (22) so berechnet wird, dass alle Bereiche der Kavität (22) mit dem metallurgischen Füllstoff (F) befüllbar sind.

7. Verfahren nach Anspruch 6, **dadurch gekennzeichnet, dass** beim Ermitteln des zweiten Datensatzes (D2) die Form der Kavität (22) so berechnet wird, dass in einem nachfolgenden Schritt (S4.2), in dem der metallurgische Füllstoff (F) komprimiert wird, eine Dichteverteilung des metallurgischen Füllstoffs (F) in der Kavität (22) erzielt wird, die homogen ist.

8. Verfahren nach Anspruch 6, **dadurch gekennzeichnet, dass** beim Ermitteln des zweiten Datensatzes (D2) die Form der Kavität (22) so berechnet wird, dass in einem nachfolgenden Schritt (S4.2), in dem der metallurgische Füllstoff (F) komprimiert wird, in allen Bereichen der Kavität (22) gleichzeitig eine Verdichtung des metallurgischen Füllstoffs (F) stattfinden kann.

9. Verfahren nach Anspruch 6, **dadurch gekennzeichnet, dass** beim Ermitteln des zweiten Datensatzes (D2) die Form der Kavität (22) so berechnet wird, dass nach einem nachfolgenden Schritt (S4.2), in dem der metallurgische Füllstoff (F) komprimiert wird, das Werkzeug (10) in einem weiteren Schritt (S4.3) beschädigungsfrei aus der Kavität (22) entnehmbar ist.

10. Verfahren nach Anspruch 6, **dadurch gekennzeichnet, dass** beim Ermitteln des zweiten Datensatzes (D2) berücksichtigt wird, dass ein oder mehrere Stempelwerkzeuge (104), die in einem nachfolgenden Schritt (S4.2), in dem der metallurgische Füllstoff (F) komprimiert wird, zum Einsatz kommen, nummerisch kontrolliert zustellbar sind, ohne miteinander zu kollidieren.

11. Verfahren nach Anspruch 1, 2, 3 oder 4, **dadurch gekennzeichnet, dass** beim Ermitteln des ersten Datensatzes (D1) und/oder des zweiten Datensatzes (D2) eine 3-dimensionale Grundform des Werkzeugs (10) in zwei oder drei Raumrichtungen so vergrößert wird, dass ein 3-dimensionale Definition des Werkzeugs (10) entsteht, die gegenüber der 3-dimensionalen Grundform ein Aufmaß umfasst, das eine Schrumpfung bei einer anschließenden metallurgischen Herstellung des Werkzeugs (10) und/oder einen Schleifabtrag bei einem abschließenden Schleifen des metallurgisch hergestellten Werkzeugs (10) berücksichtigt.

12. Verfahren nach einem der Ansprüche 1 bis 11, **dadurch gekennzeichnet, dass** ein pulvermetallurgisches Pressverfahren zum metallurgischen Herstellen des Werkzeugs (10) zum Einsatz kommt, wobei ein Pulver, vorzugsweise ein Hartmetallpulver, als metallurgischer Füllstoff (F) zum Befüllen der 3D-Matritze (20) dient.

13. Verfahren nach einem der Ansprüche 1 bis 11, **dadurch gekennzeichnet, dass** ein Schmelzverfahren zum metallurgischen Herstellen des Werkzeugs (10) zum Einsatz kommt, wobei ein rieselfähiges oder flüssiges Schmelzmaterial als metallurgischer Füllstoff (F) zum Befüllen der 3D-Matritze (20) dient.

14. Verfahren nach einem der Ansprüche 1 bis 11, **dadurch gekennzeichnet, dass** es sich bei der 3D-Matritze (20) um eine Hochdruck-Matrize handelt, die für Drücke von mehr als 1 Gigapascal ausgelegt ist.

15. Verfahren nach Anspruch 1 oder 14, **dadurch gekennzeichnet, dass** das 3D-Druckverfahren (S3) die folgenden Schritte umfasst:
- Laden oder Bereitstellen (S3.1) des zweiten Datensatzes (D2) in eine 3D-Druckvorrichtung (200),
- Durchführen eines 3D-Fertigungsprozesses (S3.2) in der 3D-Druckvorrichtung (200), wobei der 3D-Fertigungsprozeß (S3.2) durch den zweiten Datensatz (D2) beeinflusst wird, um in einem generierenden Verfahren die 3D-Matritze (20) Schritt-für-Schritt aus einem druckfähigen oder aufbaufähigen Material (dM) aufzubauen,
- Ausgeben/Entnehmen (S3.3) der 3D-Matritze (20).

16. Verfahren nach Anspruch 15, **dadurch gekennzeichnet, dass** nach dem Ausgeben/Entnehmen (S3.3) der 3D-Matritze (20) oder vor dem Ausgeben/Entnehmen (S3.3) der 3D-Matritze (20) ein Schritt (S3.4) zum Härten der 3D-Matritze (20) durchgeführt wird.

17. Verfahren nach Anspruch 1 oder 14, **dadurch gekennzeichnet,**
**dass** zusätzlich die folgenden Schritte durchgeführt werden:
- Ermitteln eines dritten Datensatzes (D3), der einen Stempel (104) charakterisiert, der zum Verdichten eines druckfähigen Materials (dM) in der Kavität (22) geeignet ist,
- Herstellen des Stempels (104) mittels eines 3D-Druckverfahrens (3D), wobei der dritte Datensatz (D3) zum direkten oder indirekten Steuern des 3D-Druckverfahrens (3D) eingesetzt wird.

18. 3D-Matritze (20), die nach einem Verfahren nach Anspruch 1 bis 16 hergestellt wurde und die zur Verwendung bei der metallurgischen Herstellung eines zahnradartigen Werkzeugs (10) ausgelegt ist.
